# EUROPÄISCHE PATENTSCHRIFT

(11) **EP 1 447 627 B1**
(45) Veröffentlichungstag und Bekanntmachung des Hinweises auf die Patenterteilung: **30.04.2008**
(21) Anmeldenummer: 04002727.8
(22) Anmeldetag: 06.02.2004
(51) Int. Cl.: F24D 19/10, F24J 2/40

(54) **Vorrichtung zum Steuern und/oder Regeln für die Gebäudeheizung oder -kühlung**
Device for the control of heating or cooling a building
Dispositif de commande et/ou contrôle d'un chauffage ou d'un refroidissement d'un immeuble

(30) Priorität: 07.02.2003 DE 20301965 U
(43) Veröffentlichungstag der Anmeldung: 18.08.2004
(73) Patentinhaber: IMMOSOLAR Vertriebs GmbH, 64546 Mörfelden (DE)
(72) Erfinder: Kristian Doepner, 33098 Paderborn (DE); Holger Vogel, 33161 Hövelhof (DE)
(74) Vertreter: Ostermann, Thomas

(56) Entgegenhaltungen:
- EP-A- 0 819 893
- EP-B- 0 611 923
- DE-A- 2 856 018
- FR-A- 2 405 443
- FR-A- 2 515 797
- US-A- 4 210 125

## Beschreibung

Die Erfindung betrifft eine Vorrichtung zum Steuern und/oder Regeln für die Gebäudebeheizung oder -kühlung nach dem Oberbegriff des Patentanspruchs 1.

Aus der DE 199 02 587 A1 ist eine Vorrichtung zum Steuern einer Solaranlage eines Gebäudes bekannt, bei der die Solaranlage derart ausgelegt ist, dass sie ganzjährig die zur Verfügung stehende Solarenergie in Wärmeenergie umsetzen kann. Die Solaranlage weist Solarkollektoren auf, die üblicherweise im Dachbereich des Gebäudes angeordnet sind. Über Verbindungsrohre sind die Solarkollektoren mit einem Warmwasserbereiter, einer Fußbodenheizung, einer Innenwandheizung, einer Außenwandheizung, einer Wärmepumpe sowie Speichern, wie beispielsweise Erdwärmespeicher etc., verbunden. Zur Steuerung des durch die Solarkollektoren erwärmten Wärmeträgers, insbesondere Wasser, Glykol, Sole sind Wegeventile, Pumpen, Mischer und den jeweiligen Baueinheiten zugeordnete Regelungseinrichtungen vorgesehen. Diese Regelungseinrichtungen bilden elektrische bzw. e-elektronische Verteilungsbauteile, während die anderen genannten Bauteile als hydraulische Verteilungsbauteile dienen. Die Dreiwegeventile, eine Pumpe sowie Thermosensoren sind als hydraulischer Solarverteiler in einem gemeinsamen Gehäuse zusammengefasst. Darüber hinaus können die elektronischen Verteilungsbauteile in einem gemeinsamen Gehäuse zusammengefasst sein.

Nachteilig an der bekannten Vorrichtung ist, dass nicht alle funktional zusammengehörigen Bauteile in einem Gehäuse zusammengefasst sind.

Aus der DE 296 01 542 U1 ist eine Vorrichtung zum Steuern für die Gebäudebeheizung mit einem Gehäuse bekannt, an dessen Außenseite eine Mehrzahl von Anschlüssen für die Zu- und Ableitung eines energietransportierenden Mediums von mindestens einer Wärmequelle zu einem Wärmeverbraucher vorgesehen ist. In dem Gehäuse ist eine Verteileinheit mit einer Mehrzahl von Verteilungsbauteilen in Form einer vormontierten Baueinheit angeordnet, so dass das Gehäuse anschlussfertig auf die Baustelle geliefert werden kann. Allerdings beschränkt sich die bekannte Vorrichtung darauf, die Be- und Entladezyklen von Wärmespeichern zu optimieren.

Aus der EP 0 819 893 A2 ist eine Vorrichtung zum Steuern und Regeln für die Gebäudeheizung bekannt, die eine Verteileinheit zur wahlweisen Kopplung von Wärmequellen und wärmeverbrauchern aufweist. Die Verteileinheit weist hydraulische Mittel zum Verteilen des mittels Sonnenkollektoren erwärmten energietransportierenden Mediums zu Wärmeverbrauchern auf, wobei das energietransportierende Medium in mindestens drei Temperaturniveaus temperaturabhängig abgeschichtet wird. Die Verteileinheit umfasst Mittel zum bedarfsabhängigen Versorgen des Gebäudes mit Wärme aus Sonnenkollektoren und/oder einer Pumpe und/oder eines fossilen Brennstoffes. Der Solarkreislauf und der Heizkreislauf sind gehäusetechnisch miteinander gekoppelt angeordnet.

Aus der FR 2 515 797 A ist eine Vorrichtung zum Steuern und Regeln einer Gebäudebeheizung bekannt, bei der Verteilbauteile einer Verteileinheit in einem Gehäuse untergebracht sind.

Aufgabe der vorliegenden Erfindung ist es, eine Vorrichtung zum Steuern und/oder Regeln für die Gebäudebeheizung oder -kühlung derart weiterzubilden, dass auf einfache Weise eine umfassende und vollständige Energieverteilung bzw. Energieversorgung eines Gebäudes ermöglicht wird.

Zur Lösung dieser Aufgabe weist die Erfindung die Merkmale des Patentanspruchs 1 auf.

Der Vorteil der Erfindung besteht insbesondere darin, dass eine vollständige und gegebenenfalls modular erweiterbare Energieverteilung in einem Heiz- und/oder Kühlsystem eines Gebäudes gewährleistet wird, wobei eine Kopplung bereitgestellt wird zwischen einer Mehrzahl von Wärmequellen und einer Mehrzahl von Wärmeverbrauchern. Als Wärmequellen können Sonnenkollektoren, Wärmepumpen und/oder Heizkessel mit fossilem Brennstoff dienen. Als Wärmeverbraucher können Heizkörper, Fußbodenheizung, Wasserspeicher unterschiedlicher Temperaturniveaus beispielsweise als Brauchwasser für Duschen oder dergleichen sowie als Trägermedium für Heizkörper, oder als ein unterhalb des Gebäudes angeordneter Erdspeicher dienen. Die Erfindung ermöglicht, dass die solarbereitgestellte Energie im Heiz-/Kühlsystem temperaturabhängig genutzt oder abgespeichert und zeitversetzt wieder bereitgestellt wird. Die Heiz-/ Kühlfunktion erfolgt energieeffizient unter der vollständigen Verwendung solarbereitgestellter Energie. Durch die steckerfertige Integration der Verteilungsbauteile in der Verteileinheit verringern sich die Montagekosten erheblich, da lediglich die Wärmeverbraucher und die Wärmequellen an die erfindungsgemäße Vorrichtung angeschlossen werden müssen.

Vorteilhaft übernimmt eine integrierte Regelungseinheit die Regelung aller bereits installierten oder notwendigen Nachheizaggregate, so dass keine zusätzliche Steuerungseinheit notwendig ist, um die zusätzliche, konventionelle Heizungs- oder wärmepumpenanlage zu regeln.

Nach einer bevorzugten Ausführungsform der Erfindung sind die hydraulischen Verteilungsbauteile auf einer gemeinsamen Trägerplatte vormontiert angeordnet, wobei die Trägerplatte an einer Bodenwand des Gehäuses befestigt ist. Vorteilhaft kann somit anwendungsabhängig eine gewünschte Konfiguration der hydraulischen Verteilungsbauteile vorgenommen werden, die dann mittels der Trägerplatte auf der Bodenwand des eine feste Dimension aufweisenden Gehäuses montierbar ist. Hierdurch kann flexibel und kostengünstig eine optimale Anpassung an unterschiedliche Anforderungen hinsichtlich des Steuerungsaufwandes gewährleistet werden.

Nach einer bevorzugten Ausführungsform der Erfindung ist das Gehäuse quaderförmig ausgebildetwobei eine den Innenraum des Gehäuses abschließende Abdeckung eine Regelungseinheit aufweist. Platzsparend kann somit die Regelungseinheit optisch sichtbar angeordnet sein, so dass gegebenenfalls mittels einer zusätzlichen Anzeigeeinheit Betriebszustände visuell signalisiert werden können bzw. mittels einer zusätzlichen Eingabeeinheit Änderungen der Steuerungs- bzw. Regelungsbedingungen vorgenommen werden können.

Nach einer bevorzugten Ausführungsform ist in der Abdeckung zusätzlich eine Anzeigeeinheit, vorzugsweise ein Bildschirm, und gegebenenfalls eine Eingabeeinheit, vorzugsweise eine Tastatur, integriert, so dass eine optische Überwachung der Regelung der Solaranlage bzw. die Möglichkeit der Einflussnahme auf die Steuerung der Solar- bzw. Heizungsanlage ermöglicht wird.

Nach einer Weiterbildung der Erfindung kann der Regelungseinheit eine Überwachungseinheit, insbesondere mit einem Mikrokontroller, zugeordnet sein, so dass eine Kommunikation zwischen der Vorrichtung einerseits und einer ortsfernen Steuereinheit andererseits ermöglicht wird. Auf diese Weise können Störungsmeldungen von der Überwachungseinheit über ein vorhandenes Kommunikationsnetz an die ortsferne Steuereinheit übertragen werden. Die Störungsmeldung kann als Kurzmeldung (short message) über ein GSM-Netz oder mittels eines Modems über ein Festnetz an die ortsferne Steuereinheit übertragen werden. Über die ortsferne Steuereinheit ist es zudem möglich, die Steuerungsparameter der Gesamtanlage anzugleichen oder zu verändern, um die Inbetriebnahme durch Fachpersonal zu verkürzen.

Ausführungsbeispiele der Erfindung werden nachfolgend anhand der Zeichnungen näher erläutert.

Es zeigen:
- Figur 1: eine schematische Draufsicht auf eine Vorrichtung zum Steuern und/oder Regeln für die Gebäudebeheizung oder -kühlung, wobei eine Vorderseite eines Gehäusesegmentes durch Aufschwenken oder Abnehmen einer Abdeckung freigelegt ist,
- Figur 2: eine Draufsicht auf eine Abdeckung der Vorrichtung,

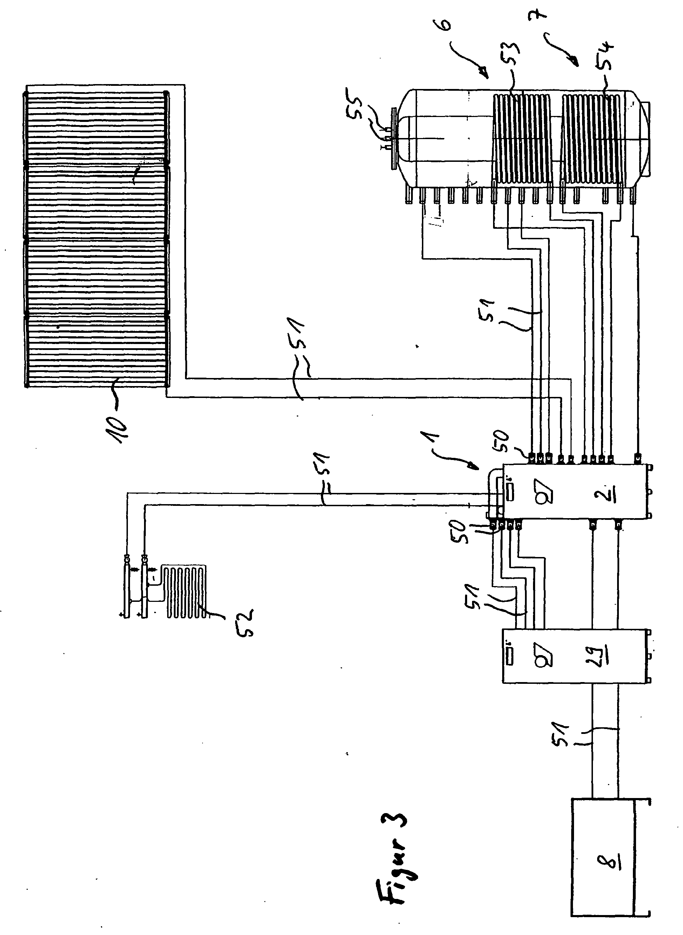

- Figur 3: ein Blockschaltbild einer Heizungsanlage mit einer Vorrichtung zum Steuern und/oder Regeln des Heizungssystems,
- Figur 4a: ein schematisches Blockschaltbild der Verteilung eines energietransportierenden Mediums im ausge-schalteten Zustand einer Wärmepumpe,
- Figur 4b: ein schematisches Blockschaltbild der Verteilung eines energietransportierenden Mediums im eingeschalteten Zustand der Wärmepumpe im Tagbetrieb und
- Figur 4c: ein schematisches Blockschaltbild der Verteilung eines energietransportierenden Mediums im eingeschalteten Zustand der Wärmepumpe im Nachtbetrieb.

Eine erfindungsgemäße Vorrichtung 1 zum Steuern und/oder Regeln für die Gebäudebeheizung oder -kühlung für eine kompakte, solare Heizungs- und Temperierungsanlage (Kühlen) eines Gebäudes besteht im wesentlichen aus einem Gehäuse 2, in dem zum einen hydraulische Verteilungsbauteile 3 und zum anderen elektronische Verteilungsbauteile 4 untergebracht sind.

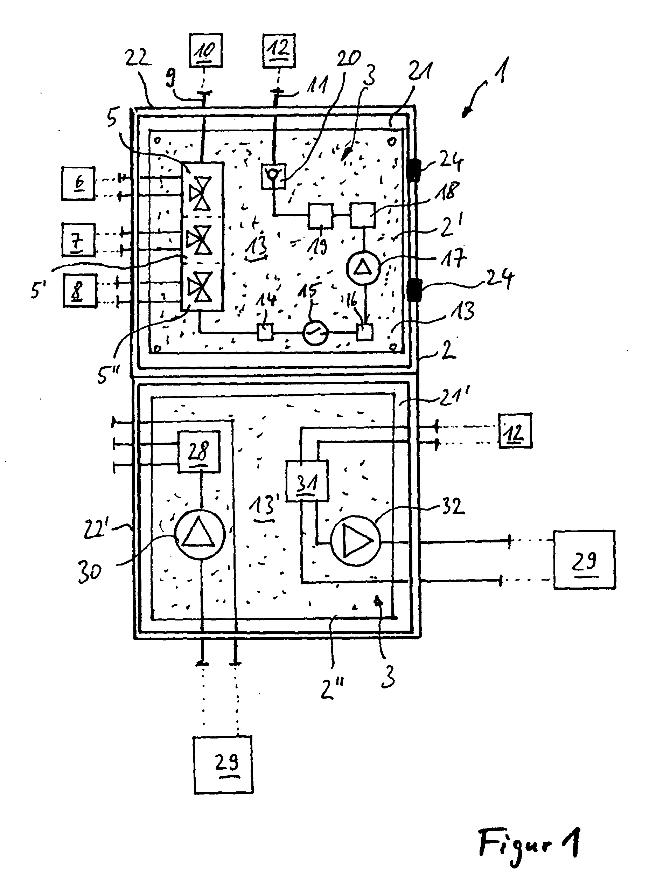

Das Gehäuse 2 kann einstückig oder als getrennte Gehäusesegmente 2' und 2", wie in Figur 1 dargestellt, ausgebildet sein. Das erste Gehäusesegment 2' weist insbesondere solche hydraulische Verteilungsbauteile 3 auf, denen eine energiesteuernde Funktion zugewiesen ist.

Im vorliegenden Ausführungsbeispiel gemäß Figur 1 weist das erste Gehäusesegment 2' drei oder mehr hintereinander geschaltete 4/3-Wegeventile 5, 5', 5" oder die in der DE 199 02 587 A1 dargestellten kompakten Misch- und Regeleinheit auf, mittels derer eine Temperaturabschichtung von jeweils einem 4/3-Wegeventil 5 zugeordneten Speichern 6, 7, 8 ermöglicht wird. Zu diesem Zweck ist ein erstes Wegeventil 5 mit einem nach außen führenden Verteilerrohranschluss 9 zur Verbindung mit einem Rücklaufrohr eines Sonnenkollektors 10 versehen. Alternativ können auch mehr als drei hintereinander geschaltete 4/3-Wegeventile oder Mischereinheiten vorgesehen sein. Das von dem Verteilerrohranschluss 9 des Sonnenkollektors 10 zugeführte energietransportierende Medium kann in dem ersten Wegeventil 5 entweder dem ersten Speicher 6, der als Brauchwasserspeicher ausgebildet ist, zugeführt oder dem zweiten Wegeventil 5' zugeführt werden. In Abhängigkeit von der Stellung des zweiten Wegeventils 5' wird das Medium dem zweiten Speicher 7 oder dem dritten Wegeventil 5" zugeführt. In Abhängigkeit von der Stellung des dritten Wegeventils 5" erfolgt ein Zufluss zu dem dritten Speicher 8 oder nach Durchfluss durch weitere hydraulische Verteilungsbauteile 3 über einen weiteren Verteilerrohranschluss 11 in einen Rücklauf des Energiekreislaufes, insbesondere in den Rücklauf einer Solaranlage 12.
Die Wegeventile 5, 5', 5" können einzeln oder alternativ als gemeinsamer Block auf einer Trägerplatte 13 montiert sein. Auch die weiteren den Wegeventilen 5, 5', 5" nachgeordneten hydraulischen Verteilungsbauteile 3 sind auf der Trägerplatte 13 montiert. Diese sind zum einen eine Spüleinrichtung 14 zum Befüllen der Verteilerrohranordnung mit dem energietransportierenden Medium, insbesondere von Glykol oder Wasser. Ein Absperrorgan 15 ist mechanisch oder elektronisch bedienbar angeordnet und ermöglicht eine Absperrung der Solarkollektoren 10 und der Speicher 6, 7, 8 einerseits und dem Kollektorrücklauf 12 andererseits. Weiterhin ist ein Permanententlüfter 16 bzw. ein Mikroblasenabscheider vorgesehen. Eine Umwälzpumpe 17 ermöglicht den Vor- und Rücklauf des energietransportierenden Mediums zu bzw. von den Solarkollektoren in einen Kollektorkreislauf. Weiterhin ist ein Durchflussmengenregulierungsventil 18, eine elektronische Wärmemengenerfassungseinrichtung 19 zur Leistungsermittlung der Solaranlage sowie ein Rückschlagventil 20 vorgesehen, bevor das energietransportierende Medium über den Verteilerrohranschluss 11 zur Solaranlage 12 fließt.

Das erste Gehäusesegment 2' und das zweite Gehäusesegment 2" sind quaderförmig ausgebildet, und zwar mit einer Bodenwand 21 bzw. 21' und schmalen Gehäusewänden 22 bzw. 22', die eine fensterartige Ausnehmung bilden. Die Dimension der Trägerplatte 13 bzw. 13' ist auf die Dimension der Bodenwand 21, 21' abgestimmt und wird nach Bestückung derselben mit den entsprechenden hydraulischen Verteilungsbauteilen 3 auf die Bodenwand 21, 21' montiert. Je nach Erfordernissen der Solaranlage kann somit eine Anordnung von die Steuerung der Solaranlage bestimmenden hydraulischen Verteilungsbauteilen 3 vorgesehen sein.

Die genannten hydraulischen Verteilungsbauteile 3 sind mit einem nicht dargestellten wärme- und/oder kälteisolierenden Material umgeben, so dass eine Betriebssicherheit der Vorrichtung 1 in einem relativ großen Temperaturbereich gegeben ist. Dabei ist besonders die Isolierung gegen Kälte zur Unterbindung der Kondensationsproblematik innerhalb einer hydraulischen Solarregelung von besonderer Bedeutung.

Die Öffnung des ersten Gehäusesegments 2' ist mittels einer Abdeckung 23 verschließbar oder vollständig abnehmbar. Die Abdeckung 23 ist in erster Linie als Schwenktür ausgebildet und über entsprechende Scharniere 24 schwenkbar mit dem Gehäusesegment 2' verbunden. Die Schwenktür 23 weist im mittleren Bereich eine fensterartige Ausnehmung auf, in der als elektronische Verteilungsbauteil 4 eine Regelungseinheit 25 angeordnet ist. Die Regelungseinheit 25 besteht aus mehreren Regelungseinrichtungen, die jeweils den Bauteilen der Solaranlage, insbesondere der Speicher 6, 7, 8 und den nicht dargestellten Heizungen zugeordnet sind. Die Regelungseinheit 25 umfasst einen Mikrokontroller, in dem ein Verteilungsprogramm abgespeichert ist, mittels dessen automatisch die durch die Sonnenkollektoren gelieferte Wärmeenergie an die entsprechenden wärmeannehmenden Bauteile, wie Speicher 6, 7, 8 oder Heizungen gesteuert wird. Dabei werden gleichzeitig auch die Rückläufe aus den vorhergehenden Speicherebenen auf darunter liegende Temperaturebenen gesteuert. Insbesondere enthält die Regelungseinheit 25 ein Regelschaltung für die Ansteuerung der 3-Wegeventile 5, 5', 5". Der Fluss des energietransportierenden Mediums wird insbesondere temperaturabhängig geregelt bzw. gesteuert, so dass stets der erste Speicher 6 zuerst mit der vorhandenen höchsten Wärmeenergie gespeist wird.

Weiterhin ist in dem Fenster der Abdeckung 23 eine Anzeigeeinheit 26 sowie eine Eingabeeinheit 27 integriert. Die Anzeigeeinheit 26 kann als Monitor oder LCD-Anzeige ausgebildet sein, in dem die aktuellen Steuerungsrandbedingungen bzw. -zustände angezeigt werden. Die Eingabeeinheit 27 kann als Tastatur ausgebildet sein, mittels derer Steuerungsgrößen verändert bzw. die Randbedingungen der Steuerung eingegeben werden können.

Darüber hinaus enthält die Regelungseinheit 25 eine Überwachungseinheit, mittels derer eine Überwachung des Betriebs der Vorrichtung ortsfern vorgenommen werden kann. Die Überwachungseinheit weist entsprechende Telekommunikationsrelevante Mittel auf, mittels derer eine Kommunikation über ein Festnetz oder ein GSM-Netz zu einer zentralen ortsfernen Steuereinheit gegeben ist. Die Nachrichten können über Kurznachrichten (SMS) des GSM-Netzes oder mittels eines Modems über das Festnetz übertragen werden.

In dem zweiten Gehäusesegment 2" sind als weitere hydraulische Verteilungsbauteile 3 ein Mischer 28, der im Vorlaufzweig der Sonnenkollektoren 10 angeordnet ist und eine Verbindung herstellt zwischen den Sonnenkollektoren 10, einer Wärmepumpe 29, Öl-/Gaskessel oder sonstigem Nachheizaggregat und einer Speicherebene, vorzugsweise der dritten bzw. letzten Speicherebene 8. Des weiteren ist eine Umwälzpumpe 30 vorgesehen zum Umwälzen eines energietransportierenden Mediums zwischen der Wärmepumpe 29, den Sonnenkollektoren 10 und der dritten bzw. letzten Speicherebene 8. Der Mischer 28 enthält eine Konstanthalteregelung, die das Medium auf eine Temperatur von beispielsweise 25°C regelt. Darüber hinaus ist ein Mischer 31 bzw. Umschaltventil und eine Umwälzpumpe 32 vorgesehen, mittels derer das energietransportierende Medium auf einen Energieabnehmer bzw. einen oder mehrere Speicher 6, 7, der zugewandten Seite des Nachheizaggregates 29 gesteuert wird. Hierbei wird Heizungswasser erwärmt und der Heizung bzw. die nicht angenommene Überschussmenge einem Puffer zugeführt. Nach Umschaltung des Ventils 31 kann auch direkt mit voller Leistung auf den Brauchwasserspeicher gefahren werden.

Vorteilhaft kann als Nachheizaggregat beispielsweise ein Kessel oder besser noch eine Wärmepumpe 29 als Wärmeübertrager ausgebildet sein, die lediglich als Kompressor und gegebenenfalls ohne eigene Regelung ausgebildet sein kann. Auch die Anwendung eines elektrischen Nachheizstabes ist verwirklichbar, so dass der gerätebaumäßige Aufwand relativ gering ist.

Die Regelungseinheit 25 verfügt über in die hydraulische Verrohrung integrierte Temperaturgeber, die vorzugsweise als digitale oder analoge Fühler ausgelegt sind. Durch Integration der Temperaturgeber in die hydraulischen Rohre der Vorrichtung 1 sind diese optimal positioniert. Die Temperaturgeber kommunizieren permanent mit der Regelungseinheit 25, wobei die Regelungseinheit 25 der hydraulischen Steuereinheit ihrerseits wieder mit der Regeleinheit des Nachheizaggregates über ein BUS-System kommuniziert und alle Fühlerwerte abgleicht. Die Regelungseinheit 25 kann daher nicht nur die Wärmemenge, sondern auch die innerhalb der hydraulischen Einheit vorherrschenden momentanen und historischen Temperaturen mittels der Überwachungseinheit übertragen.

Durch die Umleitbarkeit des von dem Nachheizaggregat 29 in Richtung des Energieabnehmers fließenden energietransportierenden Mediums in Richtung des zweiten Speichers 7 können hydraulische Leistungsüberschüsse des Nachheizaggregats 29 abgenommen werden, die vom Energieabnehmer nicht vollständig abgenommen werden können, durch den hydraulisch üblicherweise nicht regelbaren Betrieb des Nachheizaggregates 29 aber zur Verfügung stehen. Dadurch ist eine besonders effiziente Laufzeit des Nachheizaggregates 29 gegeben. Die Umleitung kann dabei auch ohne Schalteinheit erfolgen. Dafür sind die Rohrleitungen unterschiedlich dimensioniert, so dass sich die Verteilung der zur Verfügung stehenden Abnahmemenge aufgrund der hydraulischen und strömungstechnischen Gesetzmäßigkeiten ergibt.

Nach einer bevorzugten Ausführungsform der Erfindung werden solare Überschussenergien über die dritte Abspeicherungsebene, nämlich den Speicher 8, in die Bodensubstanz unter der Bodenplatte des Gebäudes geleitet, so dass die eingebrachten Energien den Boden bzw. die Bodenplatte erwärmen. Vorteilhaft können die hydraulischen Flüssigkeitsströme in dieser Speicherebene ohne aufwändige Ventiltechniken umgedreht und die gespeicherte Energie als vorgewärmte Sohle über die Wärmepumpe genutzt werden.

Nach einer weiteren bevorzugten Ausführungsform der Erfindung weist die Regelungseinheit 25 eine individuell programmierbare Legionellenschaltung auf, welche die Aufheizung des Brauchwasserspeichers 6 mittels des Nachheizaggregates 29 einleitet. Die programmierbaren Zeitintervalle wiederholen sich automatisch und berücksichtigen dabei in den Wiederholungsphasen die Zeitpunkte, in denen der Speicherinhalt durch solare Energien bereits die Temperaturschwelle der Legionellenbeseitung erreicht hatte.

Die Steuerschaltung zur Beseitigung der Bakterien "Legionellen" in dem Brauchwasserspeicher 6 sieht vor, dass für den Fall, dass der Sonnenkollektorkreis eine vorgegebene Temperatur von beispielsweise 70° C zur Beseitigung der Legionellen bereitstellen kann, der Brauchwasserspeicher 6 derart mit dem erwärmten energietransportierenden Medium beaufschlagt wird, dass die Legionellen beseitigt werden. Diese Temperaturerhöhung im Brauchwasserspeicher 6 muss daher nicht periodisch in vorgegebenen Zeitintervallen unter dem Erfordernis eines Energieaufwandes erfolgen. Stattdessen wird die Legionellenbeseitigung durchgeführt, wenn der Kollektorkreis ein entsprechendes Temperaturregime bereitstellen kann. Sobald der Kollektorkreis die erforderliche Temperatur bereitstellen kann und die Legionellenbeseitigung erfolgt ist, wird das Zeitintervall initialisiert, so dass die geplante Legionellenbeseitigung nach Ablauf dieses fest vorgegebenen Zeitintervalls zeitlich nach hinten verschoben wird. Auf diese Weise kann der Energieaufwand zur Beseitigung der Legionellen verringert werden, da sich die ausreichend hohe Temperatur der Solaranlage zu Nutze gemacht wird. Die Steuerschaltung bewirkt somit einen Legionellenschutz, bei dem die nach dem Steuerprogramm periodisch anfallenden Temperaturerhöhungen des Mediums unterbrochen werden, sobald mittels der Solaranlage das Medium mit der entsprechenden vorgegebenen Temperatur bereitgestellt werden kann. Nach Bereitstellung dieser außerplanmäßigen Temperaturerhöhung des Mediums beginnt das Zeitintervall erneut zu laufen, nach dessen Ende die nächste planmäßige Temperaturerhöhung durchgeführt werden würde.

Vorteilhaft kann die erfindungsgemäße Vorrichtung als für den Heiz- und Kühlbetrieb notwendige Verteilhydraulik anschlussfertig für den Handwerker vorinstalliert sein, wobei sie die erforderlichen elektrischen Komponenten und Fühler aufweist. Hierdurch kann der Montageaufwand wesentlich reduziert werden.

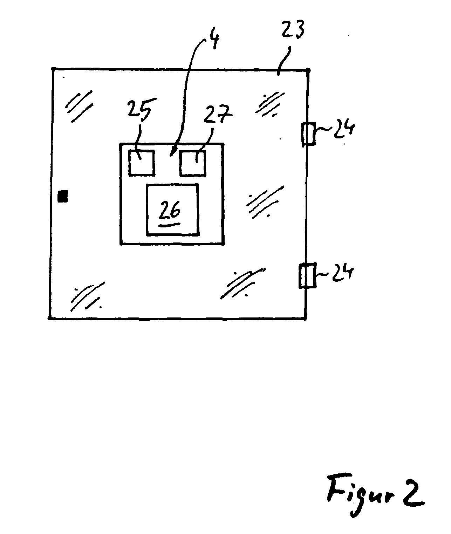

Figur 2 zeigt die Konfiguration eines Heizsystems für ein Gebäude, wobei die erfindungsgemäße Vorrichtung 1 in dem Gehäuse 2 untergebracht ist. Das Gehäuse 2 weist an der Gehäuseaußenwand angeordnete Anschlüsse 50 auf, an denen Verbindungsrohre 51 angeschlossen sind zur gesteuerten Verbindung zwischen dem Sonnenkollektor 10 und einem ersten Speicher 6 und einem Speicher 7 und einem Erdspeicher 8 und einer Fußbodenheizung 52 sowie einer Wärmepumpe 29. In dem Gehäuse 2 sind die oben beschriebenen hydraulischen bzw. elektrischen Verteilungsbauteile zu einer Verteileinheit zusammengefasst. Die hydraulischen Verteilbauteile, nämlich der Mischer, die Ventile, die Rohrverbindungen innerhalb des Gehäuses 2 sowie die Pumpen bilden die hydraulischen Mittel. Die elektronischen Verteilbauteile, wie zum Beispiel die Regelungseinheit, die Sensoren (Temperaturfühler) bilden die elektrischen Mittel zum Verteilen der Wärmeenergie. Innerhalb des Gehäuses 2 befindet sich kein Wärmeübertrager. Einen Wärmeübertrager 53 und 54 beinhaltet lediglich der erste Speicher 6, der als Brauchwasserspeicher genutzt wird, sowie der zweite Speicher 7, der für die Beschickung der Fußbodenheizung 52 dient sowie der Erdspeicher 8, der die Energieübertragung in den Boden übernimmt. Darüber hinaus weist die Wärmepumpe 29, die handelsüblich aufgebaut ist, zwei Wärmeübertrager, nämlich einen Verdampfer und einen Kondensator auf.

Am oberen Ende weist der erste Speicher 6 Anschlüsse 55 auf zur Rohrverbindung mit Armaturen von Duschen und dergleichen. In den ersten Speicher 6 wird Wärmeenergie eines höheren Temperaturniveaus gespeichert als im zweiten Speicher 7 bzw. als im Erdspeicher 8. Es ergeben sich somit drei Temperaturabladeebenen für das von dem Sonnenkollektor 10 zugeführte energietransportierende Medium. Damit eine solche Temperaturschichtung von oben nach unten (räumlich und betragsmäßig) gewährleistet ist, sind in dem Gehäuse 2 Ventile bzw. Temperaturfühler angeordnet, die nach folgendem Verfahren angesteuert bzw. betrieben werden. Im Gehäuse 2 wird durch Temperaturfühler des von dem Sonnenkollektor 10 zugeführten energietransportierenden Mediums gemessen und mit der vorgegebenen Temperatur des im ersten Speichers 6 des höchsten Temperaturniveaus gespeicherten energietransportierenden Mediums verglichen. Ist die aktuelle Temperatur des direkt vom Sonnenkollektor 10 zugeführten Mediums größer als die vorgegebene Temperatur des ersten Speichers 6, wird ein Wegeventil derart geschaltet, dass das direkt vom Sonnenkollektor 10 zugeführte Medium dem ersten Speicher 6 zugeleitet wird. Ist die aktuelle Temperatur des direkt von dem Sonnenkollektor 10 zugeführten Mediums kleiner als die vorgegebene Temperatur des ersten Speichers 6 erfolgt ein Temperaturvergleich zwischen der aktuellen Temperatur des von dem Sonnenkollektor 10 zugeführten Mediums mit einer vorgegebenen Temperatur des zweiten Speichers 7 bzw. des Erdspeichers 8. Das Temperaturniveau des zweiten Speichers 7 ist kleiner als das Temperaturniveau des ersten Speichers 6. Das Temperaturniveau des Erdspeichers 8 ist kleiner als das Temperaturniveau des zweiten Speichers 7. Ist die Temperatur des von dem Sonnenkollektor 10 zugeführten Mediums in Folge Sonneneinstrahlung im Tagbetrieb beispielsweise größer als die Temperatur des ersten Speichers 6, wird der erste Speicher 6 beladen. Eine Beladung des ersten Speichers 6 endet dann, wenn durch Temperaturvergleich des energietransportierenden Mediums im Vorlauf und Rücklauf des ersten Speichers 6 eine Übereinstimmung festgestellt wird. Der erste Speicher 6 ist dann vollständig beladen, so dass die weiteren Speicher 7, 8 beladen werden können. Die Steuerung bzw. Regelung des Zuflusses zu den Speichern 6, 7, 8 wird innerhalb des Gehäuses durch die Regeleinheit 25 unter Einschluss von entsprechend an den Rohrverbindungen 51 angeschlossenen Temperaturfühlern bewirkt.

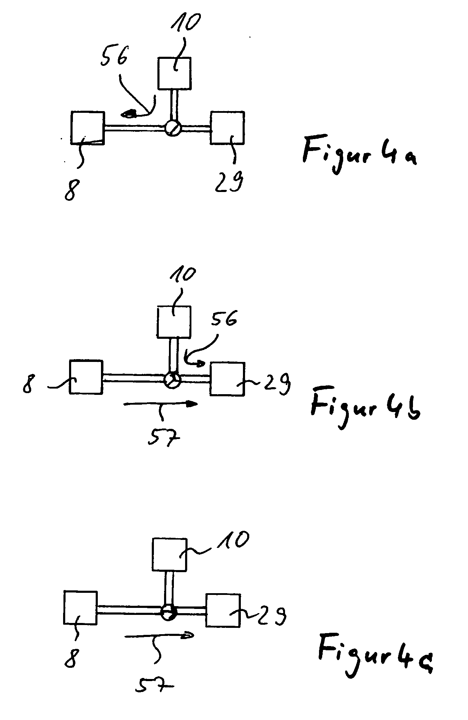

Auf diese Weise werden die Speicher 6, 7, 8 nacheinander entsprechend ihrem vorgegebenen Temperaturniveau durch den Sonnenkollektor 2 beschickt bzw. beladen. Kann der Wärmeenergiebedarf durch Entnahme des entsprechend aufgeheizten Brauchwassers im Speicher 6 bzw. des Wassers im Speicher 7 nicht allein durch das von dem Sonnenkollektor 10 bereitgestellte energietransportierende Medium (Glykol) gedeckt werden, wird die Wärmepumpe 29 in einem vorgegebenen relativ langen Zeitintervall im eingeschalteten Zustand betrieben. Bei einem Tagbetrieb des Heizungssystems, bei dem durch Sonneneinstrahlung eine ausreichende Deckung durch den Sonnenkollektor 10 gegeben ist, ist die Wärmepumpe 29 im ausgeschalteten Zustand, siehe Figur 4a. In diesem Fall werden lediglich die Speicher 6, 7 oder 8 beladen. Bei einem Tagbetrieb gemäß Figur 4b an dem die Sonneneinstrahlung zur Deckung des Wärmeenergiebedarfs nicht ausreicht, ist die Wärmepumpe 29 im eingeschalteten Zustand. Nicht dargestellte elektrohydraulische Mittel sind derart innerhalb des Gehäuses 2 angesteuert, dass der Wärmepumpe 29 zum einen das von dem Sonnenkollektor 10 zugeführte energietransportierende Medium 56 und zum anderen das in gietransportierende Medium 56 und zum anderen das in dem Erdspeicher 8 gespeicherte energietransportierende Medium 57 erhält. Durch Ansteuerung eines Mischers können die Volumenanteile der Medien 56, 57 bei 50 zu 50 liegen oder in einem anderen Verhältnis stehen. Das Verhältnis kann sich soweit verändern, dass in einem Nachtbetrieb des Heizungssystems gemäß Figur 4c der Vorlauf der Wärmepumpe 29 ausschließlich durch das in dem Erdspeicher 8 gespeicherte energietransportierende Medium 57 gespeist wird. Auf diese Weise kann die Wärmepumpe 29 im eingeschalteten Zustand auf einem relativ hohen Temperaturniveau zwischen 10° und 20° gehalten werden, was eine hohe Leistungszahl zur Folge hat. Vorzugsweise wird die Vorlauftemperatur der Wärmepumpe 29 auf einem konstanten Temperaturwert geregelt.

Auf diese Weise kann die Wärmepumpe 29 effizient den Speicher 6, 7 aufheizen, so dass mit relativ geringem Stromverbrauch eine ausreichende Heizleistung gewährleistet ist.

Ziel der Erfindung ist es insbesondere, durch eine hydraulischen Steuereinheit 1 die im System zur Verfügung stehenden Überschussenergien zu erkennen, denen Temperaturniveaus entsprechen, die auf dem vorliegenden Temperaturniveau in der Gebäudetechnik nicht direkt zur Brauchwasserbereitung bzw. für Heiz-/Kühlzwecke Verwendung finden können. Diese hydraulischen Energieströme werden von der Steuereinheit eigenständig in die dritte Speicherebene 8 geleitet, dort deponiert und im Bedarfsfall zeitversetzt den integrierten Nachheizaggregaten als Vorlauf zur Verfügung gestellt. Dabei werden die vorhandenen Überschuss- bzw. Restenergien energieeffizient in die Gebäudetechnik integriert, wobei die hydraulische Steuereinheit alle Be- und Entladezyklen eigenständig und bedarfsorientiert durchführt. Üblicherweise sind Solarsysteme nämlich darauf ausgelegt, durch den Kollektor 10 Temperaturen zu "ernten", die oberhalb von 30°C liegen. Die hier vorliegende erfindungsgemäße Systemtechnik konzentriert sich zusätzlich auf die "Ernte" von Kollektorerträgen im Bereich von 0°C bis 30°C, die ganzjährig vom Kollektor 10 erzeugt und im System abgeladen werden können.

Die erfindungsgemäße Vorrichtung enthält Mittel, so dass alle Temperaturniveaus der zu Heiz- und Kühlzwecken notwendigen Energieträger ( wie z.B. Wärmequellen, Wärmespeicher 6, 7, 8) vom System erkannt und von der hydraulischen Steuereinheit zu den Verbrauchern in der Haustechnik geleitet werden können.

Die zur Kühlung notwendige Energie kann vom System parallel zu der Solarabladung auch durchgeführt werden.

Nach einer bevorzugten Ausführungsform der Erfindung ist in der Vorrichtung 1 eine Prioritätenschaltung oder Prioritätenprogrammierung für die entsprechenden Speicherebenen 6, 7, 8 vorgesehen. Befinden sich alle Speicherebenen 6, 7, 8 auf der gleichen Prioritätsstufe so werden diese temperaturabhängig und nacheinander beladen bzw. durchströmt, wie bereits oben beschrieben.

Wird eine Speicherebene 6, 7, 8 mit einer höheren Prioritätsstufe versehen oder voreingestellt, so erfolgt die E-nergieabladung nur in diesem Speicher. Die Speicherebenen mit niedrigeren Prioritätsstufen werden dann bei der Energieabladung umgangen, obwohl das energietransportierende Medium die Temperatur hätte, um in einem Speicher 6, 7 mit einem höheren Temperaturniveau abgeladen zu werden. Der Beladezyklus des Speichers mit der höheren Priorität endet erst dann, wenn dieser vollständig geladen ist oder die zur Abladung zur Verfügung stehende Temperatur zu gering ist, um sie in dem Speicher höchster Priorität deponieren zu können.

Es kann auch eine Prioritätenreihenfolge vorgegeben werden, so dass die Speicher 6, 7, 8 in einer vorgesehenen Reihenfolge beladen werden.

Zur Einstellung der Priorität weist die Regeleinheit 25 Steuermittel und/oder eine Regelschaltung und/oder ein Regelprogramm auf.

## Patentansprüche

1. Vorrichtung zum Steuern und/oder Regeln für die Gebäudebeheizung oder -kühlung mit einem Gehäuse, an dessen Außenseite eine Mehrzahl von Anschlüssen für die Zu- und Ableitung von energietransportierenden Medien von mindestens einer Wärmequelle zu mindestens einem Wärmeverbraucher vorgesehen ist, wobei zwischen den Anschlüssen für die Zu- und Ableitung mindestens eine Verteileinheit ausgebildet ist zur wahlweisen Kopplung der Wärmequellen und der Wärmeverbraucher über die zu- bzw. abgeleiteten energietransportierenden Medien, dass die Verteileinheit mehrere Verteilungsbauteile aufweist, wobei die Verteileinheit (1) hydraulische Mittel (3, 4, 5) zum Verteilen des mittels Sonnenkollektoren (10) erwärmten energietransportierenden Mediums zu Wärmeverbrauchern mit mindestens drei Temperaturniveaus zur temperaturabhängigen Abschichtung des zugeführten energietransportierenden Mediums umfasst, dass die Verteileinheit (1) Mittel zum temperaturabhängigen Bereitstellen eines energietransportierenden Mediums aus einer von mehreren Wärmequellen für einen Wärmeverbraucher umfasst und dass die Verteileinheit (1) Mittel zum bedarfsabhängigen Versorgen des Gebäudes mit Wärme oder Kühlung aus Sonnenkollektoren (10) und/oder einer Wärmepumpe (29) und/oder eines fossilen Brennstoffs umfasst, **dadurch gekennzeichnet, dass** die Verteilungsbauteile der Verteileinheit (1) als eine vormontierte Baueinheit in einem Gehäuse (2) angeordnet sind, dass das Gehäuse (2) über ein erstes Gehäusesegment (2') und ein zweites Gehäusesegment (2") verfügt, wobei in dem ersten Gehäusesegment (2') die hydraulischen Mittel (5, 5', 5") zum verteilen des durch die Sonnenkollektorren (10) erwärmten energietransportierenden Mediums zu Wärmeverbrauchern mit mindestens drei Temperaturniveaus zur temperaturabhängigen Abschichtung desselben Mediums aufweist und wobei in dem zweiten Gehäusesegment (2") mindestens ein Mischer (28, 31) und eine Umwälzpumpe (30, 32) derart vorgesehen sind, dass die mittels der Sonnenkollektoren (10) in Wärmespeichern unterschiedlicher Temperaturniveaus bereitgestellte Wärmemenge über eine Wärmepumpe (29) einem Heizkreislauf zugeführt wird.

2. Vorrichtung nach Anspruch 1, **dadurch gekennzeichnet, dass** die Mittel als hydraulische Verteilungsbauteile (3) zum Verteilen mit mindestens einem Verbindungsrohr und/oder Bereitstellen des energietransportierenden Mediums und/oder die Mittel zum Versorgen des Gebäudes als Verbindungsrohre und/oder als Wegeventile und/oder als Pumpen und/oder als Mischer und/oder als elektrische Verteilungsbauteile mit mindestens einer Regelungseinheit (25) und/oder einem Sensor ausgebildet sind.

3. Vorrichtung nach Anspruch 1 oder 2, **dadurch gekennzeichnet, dass** die Mittel (3, 4) auf einer gemeinsamen Trägerplatte oder auf einem gemeinsamen Trägergerüst (13) angeordnet sind, wobei die Trägerplatte oder das Trägergerüst in dem quaderförmig ausgebildeten Gehäuse eingesetzt gelagert ist, und dass das Gehäuse eine verschließbare Abdeckung (23) aufweist, an der die Regelungseinheit (25) gelagert ist.

4. Vorrichtung nach einem der Ansprüche 1 bis 3, **dadurch gekennzeichnet, dass** die Abdeckung (23) über ein Scharnier (24) schwenkbar mit einer senkrecht zur Trägerplatte (13) verlaufenden schmalen Gehäusewand verbunden ist.

5. Vorrichtung nach einem der Ansprüche 1 bis 4, **dadurch gekennzeichnet, dass** die Abdeckung (23) eine Ausnehmung aufweist, in der die Regelungseinheit (25) mit einer Anzeigeeinheit (26) und einer Eingabeeinheit (27) integriert angeordnet ist.

6. Vorrichtung nach einem der Ansprüche 1 bis 5, **dadurch gekennzeichnet, dass** das Gehäuse (2, 2', 2") an einer vertikalen Wand des Gebäudes unter paralleler Anordnung der Trägerplatte (13) zu derselben montiert ist und dass die Abdeckung (23) als eine um eine vertikale Achse verschwenkbare Schwenktür ausgebildet ist.

7. Vorrichtung nach einem der Ansprüche 1 bis 6, **dadurch gekennzeichnet, dass** die elektrische Regelungseinheit (25) eine individuell programmierbare Legionellenschaltung beinhaltet, welche die Aufheizung des Brauchwasserspeichers (6) mittels des Nachheizaggregates (29) in periodischen Zeitabständen einleitet, wobei bei solarer Bereitstellung der vorgegebenen Aufheiztemperatur das periodische Zeitintervall erneut gestartet wird.

8. Vorrichtung nach einem der Ansprüche 1 bis 7, **dadurch gekennzeichnet, dass** die der Wärmepumpe (29) und/oder einem Nachheizaggregat zugeordneten Mittel von den anderen Mitteln räumlich getrennt angeordnet sind.

## Claims

1. Device for the control and/or regulation of a process for heating or cooling a building which comprises a housing having a plurality of connections on the outside thereof for feeding and discharging energy transporting media from at least one heat source to at least one heat consumer wherein at least one distributor unit is provided between said feed and discharge connections for selective coupling of heat sources and heat consumers via the energy transporting media as fed or discharged, respectively; wherein said distributor unit includes a plurality of distributor components; wherein said distributor unit (1) comprises hydraulic means (3, 4, 5) for distributing an energy transporting medium heated by means of solar collectors (10) to heat consumers with at least three temperature levels for temperature-dependent stratification of said energy transporting medium as fed; wherein the distributor unit (1) comprises means comprises adapted to make available any of said energy transporting media from one of several heat sources to a heating consumer; and wherein the distributor unit (1) comprises means (1) for supply a building with the necessary amount of heating or cooling medium which is generated by solar collectors (10) and/or a heat pump (29) and/or from a fossil fuel, **characterized by** the fact that the distributor components of the distributor unit (1) are a preassembled unit disposed inside a housing (2); and that said housing (2) comprises a first housing segment (2') and a second housing segment (2"), said first housing segment (2') accommodating said hydraulic means (5, 5' 5") for distributing the energy transporting medium heated by said solar collectors (10) to heat consumers with at least three temperature levels for temperature dependent stratification of said medium and said second housing element (2") having at least one mixer (28, 31) and a circulation pump (30, 32) such that the amount of heat made available by said solar collectors (10) and stored in heat accumulators rated for different temperature levels is supplied to a heat circuit with the aid of a heat pump (29).

2. Device according to Claim 1, **characterized by** the fact that the hydraulic distributor components (3) comprise means provided as at least one connecting pipe for distributing and/or making available the energy transporting medium and/or as connecting pipes for medium supply to a building and/or as directional valves and/or as mixers and/or as electric distributor components consisting of at least one regulating unit (25) and/or one sensor.

3. Device according to Claim 1 or Claim 2, **characterized by** the fact that the means (3, 4) are arranged on one common support plate or one common support frame (13), said supporting plate or supporting frame being embedded in the rectangular housing, and that the housing is fitted with a lockable cover (23) to which the regulating unit (25) is attached.

4. Device according to any of the preceding Claims 1 to 3, **characterized by** the fact that the cover (23) is by means of a hinge (24) swingably connected to a small housing wall that extends perpendicular to the support plate (13).

5. Device according to any of the preceding Claims 1 to 4, **characterized by** the fact that the cover (23) comprises a recessed portion in which the regulating unit (25) integrated with a display unit (26) and an input unit (27) is disposed.

6. Device according to any of the preceding Claims 1 to 5, **characterized by** the fact that the housing (2, 2' 2") is attached to a vertical building wall in parallel relation to the support plate (13) and that the cover (23) is provided in the form of a swing door that swivels about a vertical axis.

7. Device according to any of the preceding Claims 1 to 6, **characterized by** the fact that the electric regulating unit (25) comprises an individually programmable legionella type circuit arrangement adapted to initiate the process of heating up the service water accumulator (6) with the aid of a reheating unit (29) in periodic time intervals wherein a periodic time interval is recommenced each time a predetermined heat-up temperature has been achieved by solar generation.

8. Device according to any of the preceding Claims 1 to 7, **characterized by** the fact that the heat pump (29) and/or any means associated with the reheating unit is arranged separately from the other means.

## Revendications

1. Dispositif pour la commande et / ou le réglage d'un chauffage ou d'un refroidissement d'un immeuble avec un boîtier, sur le côté extérieur duquel sont prévus plusieurs raccords pour l'amenée ou l'évacuation d'agents transporteurs d'énergie d'au moins une source de chaleur à au moins un consommateur de chaleur, au moins une unité de distribution étant aménagée, entre les raccords d'amenée et d'évacuation, pour coupler à volonté les sources de chaleur et les consommateurs de chaleur par l'intermédiaire des moyens de transport d'énergie, l'unité de distribution présentant plusieurs éléments de distribution et l'unité de distribution (1) comprenant des moyens hydrauliques (3, 4, 5) pour distribuer aux consommateurs de chaleur l'agent transporteur d'énergie, chauffé par des collecteurs solaires (10), avec au moins trois niveaux de température pour la répartition de l'agent transporteur d'énergie en fonction de la température, l'unité de distribution (1) comprenant des moyens pour la mise à disposition d'un agent transporteur d'énergie à partir de l'une de plusieurs sources de chaleur à destination d'un consommateur de chaleur en fonction de la température, et l'unité de distribution (1) comprenant des moyens pour approvisionner l'immeuble en chaleur ou en refroidissement en fonction des besoins, à partir des collecteurs solaires (10) et / ou d'une pompe de chaleur (29) et / ou d'un combustible fossile,
**caractérisé en ce que**
les éléments de distribution de l'unité de distribution (1) sont agencés dans un boîtier (2) en tant qu'unité pré-montée, que le boîtier (2) dispose d'un premier segment de boîtier (2') et d'un deuxième segment de noîtier (2"),

2. Dispositif selon la revendication 1, **caractérisé en ce que** les moyens sont réalisés pour la distribution en tant qu'éléments de distribution hydrauliques (3) avec au moins un tube de liaison et / ou la mise à disposition de l'agent transporteur d'énergie et / ou les moyens pour l'approvisionnement de l'immeuble en tant que tubes de liaison et / ou en tant que distributeur et / ou en tant que pompes et / ou en tant que mélangeurs et / ou en tant qu'éléments de répartition électriques avec au moins une unité de réglage (25) et / ou avec un capteur.

3. Dispositif selon revendication 1 ou 2, **caractérisé en ce que** les moyens (3, 4) sont disposés sur une plaque de support commune ou sur un châssis de support commun (13), la plaque de support ou le châssis de support étant montés dans le boîtier de conception parallélépipédique, et que le boîtier présente un couvercle pouvant être fermé (23), sur lequel l'unité de réglage (25) est montée.

4. Dispositif selon l'une des revendications 1 à 3, **caractérisé en ce que** le couvercle (23) est relié en pivotement au moyen d'une charnière (24) à une paroi du boîtier, qui s'étend perpendiculairement à la plaque de support (13).

5. Dispositif selon l'une des revendications 1 à 4, **caractérisé en ce que** le couvercle (23) présente un évidement dans le quel l'unité de réglage (25) est logée, intégrée avec une unité d'affichage (26) et une unité d'introduction (27).

6. Dispositif selon l'une des revendications 1 à 5, **caractérisé en ce que** le boîtier (2, 2', 2") est monté sur une paroi verticale de l'immeuble, la plaque de support (13) étant disposée parallèlement à celle-ci, et **en ce que** le couvercle (23) est réalisé sous la forme d'une porte pouvant pivoter autour d'un axe vertical.

7. Dispositif selon l'une des revendications 1 à 6, **caractérisé en ce que** l'unité de réglage électrique (25) comprend un circuit d'élimination de légionelles individuellement programmable, qui initialise le chauffage du réservoir d'eau de consommation (6) au moyen de l'installation de post-chauffage (29) à intervalles de temps périodiques, l'intervalle de temps périodique étant démarré de nouveau lorsque la température de chauffage prédéterminée est obtenue par la voie solaire.

8. Dispositif selon l'une des revendications 1 à 7, **caractérisé en ce que** les moyens associés à la pompe de chauffage (39) et / ou à une installation de post-chauffage sont agencés séparés spatialement des autres moyens.
